# EUROPEAN PATENT SPECIFICATION

(11) **EP 1 551 890 B1**
(45) Date of publication and mention of the grant of the patent: **31.03.2010**
(21) Application number: 03756756.7
(22) Date of filing: 16.10.2003
(51) Int. Cl.: C08F 283/10, C08F 289/00, C09D 151/08, C08F 290/06, G03F 7/00, B29C 41/00, C08L 63/00

(54) **CURABLE COMPOSITIONS AND RAPID PROTOTYPING PROCESS USING THE SAME**
HÄRTBARE ZUSAMMENSETZUNGEN UND SCHNELLPROTOTYPPROZESS DAMIT
COMPOSITIONS DURCISSABLES ET PROCEDE DE PROTOTYPAGE RAPIDE LES UTILISANT

(30) Priority: 18.10.2002 US 273357
(43) Date of publication of application: 13.07.2005
(73) Proprietor: DSM IP Assets B.V., 6411 TE Heerlen (NL)
(72) Inventor: XU, Jigeng, Boothwyn, PA 19061 (US)
(74) Representative: Hatzmann, Martin
(86) International application number: PCT/NL2003/000702
(87) International publication number: WO 2004/035643

(56) References cited:
- EP-A- 0 360 869
- EP-A- 0 848 294
- EP-A- 0 938 026
- WO-A-01/12679
- WO-A-97/42549
- WO-A-03/080755
- US-A- 5 476 748
- US-A- 5 707 780
- US-A- 5 972 563
- PATENT ABSTRACTS OF JAPAN vol. 1999, no. 12, 29 October 1999 (1999-10-29) & JP 11 199647 A (TEIJIN SEIKI CO LTD), 27 July 1999 (1999-07-27)

## Description

### FIELD OF THE INVENTION

The present invention relates to curable compositions capable of providing articles having the combination of a good elongation at break and good high temperature resistance. In addition, the present invention relates to applications for such compositions, such as their use in rapid prototyping processes.

### BACKGROUND

In the field of curable compositions, for instance in the field of rapid prototyping compositions, high temperature resistance, elongation to break, and cure speed are relevant parameters. Unfortunately, a composition providing good high temperature resistance often exhibits a poor elongation to break. One of the objectives of the present invention is to provide compositions yielding both a good high temperature resistance and a good elongation to break. Another objective is to provide compositions that furthermore have a good cure speed.

Examples of prior curable compositions are set forth in, for instance, U.S. Patent 5,476,748; U.S. Patent 5,707,780, which describes a stereolithography composition comprising at least two epoxy resins; U.S. Patent 5,972,563; U.S. Patent 5,981,616; U.S. Patent 6,313,188; U.S. Patent 6,368,769; European Patent Application 0360869; and Javanese Patent Application 11199647; WO97/42549 describes a photosensitive resin composition for rapid prototyping comprising at least two epoxy resins, one of the resins being solid at room temperature and comprising aromatic groups, and one of the resins being a liquid; EP0848294 discloses a photocurable resin composition comprising an oxetane compound and an epoxy compound.

### SUMMARY

The present invention provides compositions having both a good high temperature resistance and a good elongation to break. Furthermore, the present invention provides compositions that additionally have a good cure speed. Also, the present invention provides applications for the compositions, such as their use in a rapid prototyping process.

In one embodiment, the present invention provides a curable composition comprising:
(i) at least 50 wt %, relative to the total weight of the composition, one or more aromatic epoxies; and
(ii) one or more aliphatic epoxies; and
(iii) one or more oxetanes
wherein said composition, after full cure, has a heat deflection temperature under a pressure of 1.82 MPa of at least 105°C and an elongation at break of at least 1.5%.

In another embodiment, the present invention provides a curable composition having an E10 cure speed of less than 80 mJ/cm² and, after full cure, a heat deflection temperature under a pressure of 1.82 MPa of at least 125°C and an elongation at break of at least 2.5%.

Additional objects, advantages and features of the present invention are set forth in this specification, and in part will become apparent to those skilled in the art on examination of the following, or may be learned by practice of the invention. The inventions disclosed in this application are not limited to any particular set of or combination of objects, advantages and features. It is contemplated that various combinations of the stated objects, advantages and features make up the inventions disclosed in this application.

### DETAILED DESCRIPTION

### (A) Cationically curable component

The present compositions comprise at least one cationically curable component, *e*.*g*. at least one cyclic ether component, cyclic lactone component, cyclic acetal component, cyclic thioether component, spiro orthoester component, epoxy-functional component, and/or oxetane-functional component. Preferably, the present compositions comprise at least one component selected from the group consisting of epoxy-functional components and oxetane-functional components. Preferably, the compositions comprise, relative to the total weight of the composition, at least 20 wt% of cationically curable components, for instance at least 40 wt%, at least 60 wt%, at least 70 wt%, or at least 80 wt%. Generally, the compositions comprise, relative to the total weight of the composition, less than 99 wt% of cationically curable components, for instance less than 95 wt%, less than 90 wt%, or less than 85 wt%.

### (A1) Epoxy-functional components

The present compositions preferably comprise at least one epoxy-functional component, *e*.*g*. an aromatic epoxy-functionai component. ("aromatic epoxy") and/or an aliphatic epoxy-functional component ("aliphatic epoxy"). Epoxy-functional components are components comprising one or more epoxy groups, *i*.*e*. one or more three-member ring structures (oxiranes) according to formula (1):

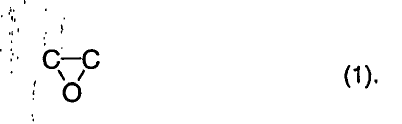

### (A1-i) aromatic epoxies

Aromatic epoxies are components that comprise one or more epoxy groups and one or more aromatic rings. The compositions may comprise one or more aromatic epoxies, *e*.*g*. two or more aromatic epoxies or three or more aromatic epoxies.

Examples of aromatic epoxies include aromatic epoxies derived from a polyphenol, *e*.*g*. from bisphenols such as bisphenol A (4,4'-isopropylidenediphenol), bisphenol F (bis[4-hydroxyphenyl]methane), bisphenol S (4,4'-sulfonyldiphenol), 4,4'-cyclohexylidenebisphenol, 4,4'-biphenol, or 4,4'-(9-fluorenylidene)diphenol. The bisphenols may be alkoxylated (*e*.*g*. ethoxylated and/or propoxylated) and/or halogenated (*e*.*g*. brominated). Examples of bisphenol epoxies include bisphenol diglycidyl ethers.

Further examples of aromatic epoxies include triphenylolmethane triglycidyl ether, 1,1,1-tris(p-hydroxyphenyl)ethane triglycidyl ether, and aromatic epoxies derived from a monophenol, *e*.*g*. from resorcinol (for instance resorcin diglycidyl ether) or hydroquinone (for instance hydroquinone diglycidyl ether). Another example is nonylphenyl glycidyl ether.

In addition, examples of aromatic epoxies include epoxy novolacs, for instance phenol epoxy novolacs and cresol epoxy novolacs. Commercial examples of cresol epoxy novolacs include, *e*.*g*., EPICLON N-660, N-665, N-667, N-670, N-673, N-680, N-690, and N-695, manufactured by Dainippon Ink and Chemicals, Inc. Examples of phenol epoxy novolacs include, *e*.*g*., EPICLON N-740, N-770, N-775, and N-865, manufactured by Dainippon Ink and Chemicals Inc. Examples of epoxy novolacs also include those components represented by the following formulae (2), (3), for (4): 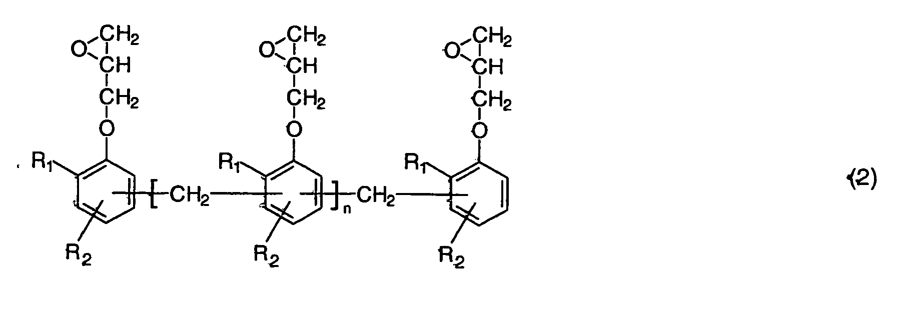 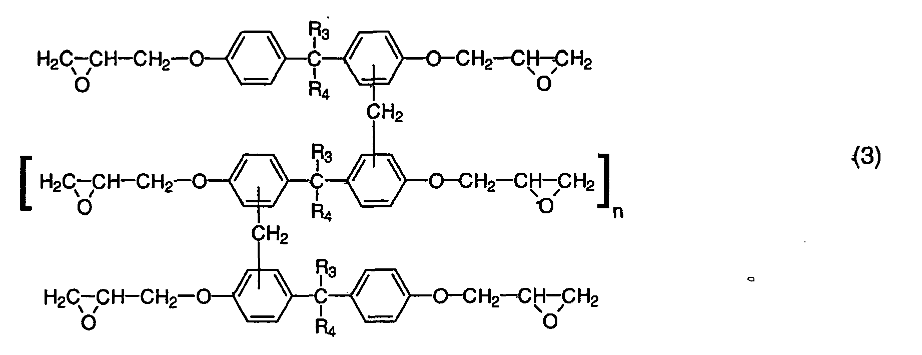 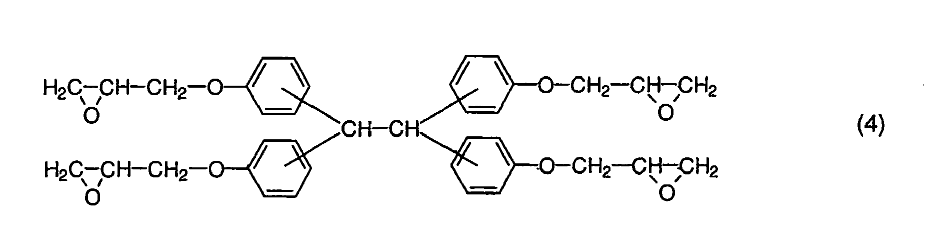 wherein
R₁ represents a hydrogen atom or a methyl group;
R₂ represents a hydrogen atom, an alkyl group having 1-4 carbon atoms (e.g. a methylethyl-, isopropyl-, or t-butyl group), a phenyl group, or an aralkyl group having 7-10 carbon atoms;
n represents an integer of 1-12 (*e.g*. 2-12 or 1-5);
R₃ represents a hydrogen atom or an alkyl group having 1-3 atoms (e.g. a methyl-, ethyl-, or n-propyl group); and
R₄ represents a hydrogen atom or an alkyl group having 1-3 atoms (*e*.*g*. a methyl-, ethyl-, or n-propyl group).

Examples of aromatic epoxies are also listed in U.S. Patent 6,410,127, which is hereby incorporated in its entirety by reference.

Preferably, the present compositions comprise, relative to the total weight of the composition, at least 10wt% of one or more aromatic epoxies, *e.g*. at least 25 wt%, at least 40wt%, at least 45 wt%, at least 50 wt%, or at least 55 wt%. Generally, the present compositions will comprise, relative to the weight of the composition less than 90 wt% of one or more aromatic epoxies, for instance less than 80 wt%.

### (A1-ii) aliphatic epoxies

Aliphatic epoxies are components that comprise one or more epoxy groups and are absent an aromatic ring. The compositions may comprise one or more aliphatic epoxies.

Examples of aliphatic epoxies include glycidyl ethers of C₂-C₃₀ alkyls; 1,2 epoxies of C₃-C₃₀ alkyls; mono and multi glycidyl ethers of aliphatic alcohols and polyols such as 1,4-butanediol, neopentyl glycol, cyclohexane dimethanol, dibromo neopentyl glycol, trimethylol propane, polytetramethylene oxide, polyethylene oxide, polypropylene oxide, glycerol, and alkoxylated aliphatic alcohols and polyols.

In one embodiment, it is preferred that the aliphatic epoxies comprise one or more cycloaliphatic ring structures. For instance, the aliphatic epoxies may have one or more cyclohexene oxide structures, *e*.*g*. two cyclohexene oxide structures. Examples of aliphatic epoxies comprising a ring structure include hydrogenated bisphenol A diglycidyl ethers, hydrogenated bisphenol F diglycidyl ethers, hydrogenated bisphenol S diglycidyl ethers, bis(4-hydroxycyclohexyl)methane diglycidyl ether, 2,2-bis(4-hydroxycyclohexyl)propane diglycidyl ether, 3,4-epoxycyclohexylmethyl-3,4-epoxycyclohexanecarboxylate, 3,4-epoxy-6-methylcyclohexylmethyl-3,4-epoxy-6-methylcyclohexanecarboxylate, di(3,4-epoxycyclohexylmethyl)hexanedioate, di(3,4-epoxy-6-methylcyclohexylmethyl)hexanedioate, ethylenebis(3,4-epoxycyclohexanecarboxylate), ethanedioldi(3,4-epoxycyclohexylmethyl) ether, and 2-(3,4-epoxycyclohexyl-5,5-spiro-3,4-epoxy)cyclohexane-1,3-dioxane.

Examples of aliphatic epoxies are also listed in U.S. Patent 6,410,127, which is hereby incorporated in its entirety by reference.

In one embodiment, the present compositions comprise, relative to the total weight of the composition, at least 5 wt% of one or more aliphatic epoxies, for instance at least 8 wt%, at least 10wt%, or at least 12 wt%. Generally, the present compositions will comprise, relative to the total weight of the composition, less than 50 wt% of aliphatic epoxies, for instance less than 40 wt%, less than 30 wt%, less than 25wt%, or less than 20 wt%.

### (A2) Oxetane-functional components

The present compositions comprise one or more oxetane-functional components ("oxetanes"). Oxetanes are components comprising one or more oxetane groups, *i*.*e*. one or more four-member ring strictures according to formula (5):

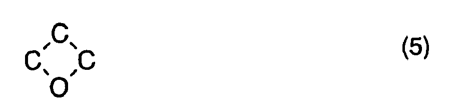

Examples of oxetanes include components represented by the following formula (6): 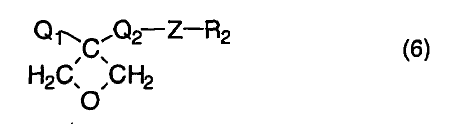 wherein
Q₁ represents a hydrogen atom, an alkyl group having 1 to 6 carbon atoms (such as a methyl, ethyl, propyl, or butyl group), a fluoroalkyl group having 1 to 6 carbon atoms, an allyl group, an aryl group, a furyl group, or a thienyl group;
Q₂ represents an alkylene group having 1 to 6 carbon atoms (such as a methylene, ethylene, propylene, or butylene group), or an alkylene group containing an ether linkage, for example, an oxyalkylene group, such as an oxyethylene, oxypropylene, or oxybutylene group
Z represents an oxygen atom or a sulphur atom; and
R₂ represents a hydrogen atom, an alkyl group having 1-6 carbon atoms (e.g. a methyl group, ethyl group, propyl group, or butyl group), an alkenyl group having 2-6 carbon atoms (e.g. a 1-propenyl group, 2-propenyl group, 2-methyl-1-propenyl group, 2-methyl-2-propenyl group, 1-butenyl group, 2-butenyl group, or 3-butenyl group), an aryl group having 6-18 carbon atoms (e.g. a phenyl group, naphthyl group, anthranyl group, or phenanthryl group), a substituted or unsubstituted aralkyl group having 7-18 carbon atoms (e.g. a benzyl group, fluorobenzyl group, methoxy benzyl group, phenethyl group, styryl group, cynnamyl group, ethoxybenzyl group), an aryloxyalkyl group (e.g. a phenoxymethyl group or phenoxyethyl group), an alkylcarbonyl group having 2-6 carbon atoms (e.g. an ethylcarbonyl group, propylcarbonyl group, or butylcarbonyl group), an alkoxy carbonyl group having 2-6 carbon atoms (e.g. an ethoxycarbonyl group, propoxycarbonyl group, or butoxycarbonyl group), an N-alkylcarbamoyl-group having 2-6 carbon atoms (e.g. an ethylcarbamoyl group, propylcarbamoyl group, butylcarbamoyl group, or pentylcarbamoyl group), or a polyethergroup having 2-1000 carbon atoms.

Preferred oxetanes include those wherein
Q₁ represents a C₁-C₄ alkyl group (*e*.*g*. an ethyl group),
Z represents an oxygen atom,
Q₂ represents a methylene group, and/or
R₂ represents a hydrogen atom, a C₁-C₈ alkyl group, or a phenylgroup.

Some further examples of oxetanes include the following:
Oxetanes containing one oxetane ring in the molecule include, for instance, 3-ethyl-3-hydroxymethyloxetane, 3-(meth)allyloxymethyl-3-ethyfoxetane, (3-ethyl-3-oxetanylmethoxy)methylbenzene, (3-ethyl-3-oxetanylmethoxy)benzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl] phenylether, isobutoxymethyl (3-ethyl-3-oxetanylmethyl) ether, isobornyloxyethyl (3-ethyl-3-oxetanylmethyl) ether, isobornyl (3-ethyl-3-oxetanyimethyl) ether, 2-ethylhexyl (3-ethyl-3-oxetanyl methyl) ether, ethyldiethylene glycol (3-ethyl-3-oxetanylmethyl) ether, dicyclopentadiene (3-ethyl-3-oxetanylmethyl) ether, dicyclopentenyloxyethyl (3-ethyl-3-oxetanyl methyl) ether, dicyclopentenyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanylmethyl) ether, 2-tribromophenoxyethyl (3-ethyl-3-oxetanylmethyl) ether, 2-hydroxyethyl (3-ethyl-3-oxetanyl methyl) ether, 2-hydroxypropyl (3-ethyl-3-oxetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, bornyl (3-ethyl-3-oxetanylmethyl) ether, 2-phenyl-3, 3-dimethyl-oxetane, and 2-(4-methoxyphenyl)-3, 3-dimethyl-oxetane.

Oxetanes containing two or more oxetane rings in the molecule include, for instance, 3,7-bis(3-oxetanyl)-5-oxa-nonane, 3,3'-(1,3-(2-methylenyl)propanediylbis(oxymethylene))bis-(3-ethybxetane), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methy]propane, ethylene glycol bis(3-ethyl-3-oxetanylmethyl) ether, dicyclopentenyl bis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene (3-ethyl-3-oxetanylmethyl) ether, trimethylolpropane tris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl)ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, caprolactone-modified dipentaerythritol pentakis(3-ethyl-3-oxetanylmethyl) ether, ditrimethylolpropane tetrakis(3-ethyl-3-oxetanylmethyl) ether, ethoxylated bisphenol A bis(3-ethyl-3-oxetanylmethyl) ether, propoxylated bisphenol A bis(3-ethyl-3-oxetanylmethyl) ether, ethoxylated hydrogenated bisphenol A bis(3-ethyl-3-oxetanylmethyl) ether, propoxylated hydrogenated bisphenol A bis(3-ethyl-3-oxetanylmethyl) ether, ethoxylated bisphenol F (3-ethyl-3-oxetanylmethyl) ether.

In one embodiment, the present compositions comprise, relative to the total weight of the composition, at least 5 wt% of one or more oxetanes, *e.g*. at least 8 wt%, at least 10 wt%, at least 12 wt%, or at least 14 wt%. Generally, the present compositions comprise less than 50 wt% of oxetanes, *e*.*g*. less than 40 wt%, less than 35 wt%, less than 30 wt%, or less than 25 wt%.

### (B) Free radical polymerizable components

In addition to one or more cationically curable components, the present invention may comprise one or more free radical curable components, *e*.*g*. one or more free radical polymerizable components having one or more ethylenically unsaturated groups, such as (meth)acrylate (*i.e*. acrylate and/or methacrylate) functional components.

Examples of monofunctional ethylenically unsaturated components include acrylamide, N,N-dimethylacrylamide, (meth)acrytoylmorpholine, 7-amino-3,7-dimethyloctyl (meth)acrylate, isobutoxymethyl(meth)acrylamide, isobornyloxyethyl (meth)acrylate, isobornyl (meth)acrylate, 2-ethylhexyl (meth)acrylate, ethyldiethylene glycol (meth)acrylate, t-octyl (meth)acrylamide, diacetone (meth)acrylamide, dimethylaminoethyl (meth)acrylate, diethylaminoethyl (meth)acrylate, lauryl (meth)acrylate, dicyclopentadiene (meth)acrylate, dicyclopentenyloxyethyl (meth)acrylate, dicyclopentenyl (meth)acrylate, N,N-dimethyl(meth)acrylamidetetrachlorophenyl (meth)acrylate, 2-tetrachlorophenoxyethyl (meth)acrylate, tetrahydrofurfuryl (meth)acrylate, tetrabromophenyl (meth)acrylate, 2-tetrabromophenoxyethyl (meth)acrylate, 2-trichlorophenoxyethyl (meth)acrylate, tribromophenyl (meth)acrylate, 2-tribromophenoxyethyl (meth)acrylate, 2-hydroxyethyl (meth)acrylate, 2-hydroxypropyl meth)acrylate, vinylcaprolactam, N-vinytpyrrotidone, phenoxyethyl (meth)acrylate, butoxyethyl (meth)acrylate, pentachlorophenyl (meth)acrylate, pentabromophenyl (meth)acrylate, polyethylene glycol (meth)acrytate, pentabromophenyl (meth)acrylate, polyethylene glycol mono(meth)acryiate, polypropylene glycol mono(meth)acrylate, bornyl (meth)acrylate, and, methyltriethylene diglycol (meth)acrylate.

Examples of the polyfunctional ethylenically unsaturated components include ethylene glycol di(meth)acrylate, dicyclopentenyl di(meth)acrylate, triethylene glycol diacrylate, tetraethylene glycol di(meth)acrylate, tricyclodecanediyldimethylene di(meth)acrylate, trimethylolpropane tri(meth)acrylate, ethoxylated trimethylolpropane tri(meth)acrylate, propoxylated trimethylolpropane tri(meth)acrylate, tripropylene glycol di(meth)acrylate, neopentyl glycol di(meth)acrylate, both-terminal (meth)acrylic acid adduct of bisphenol A diglycidyl ether, 1,4-butanediol di(meth)acrylate, 1,6-hexanediol di(meth)acrylate, polyethylene glycol di(meth)acrylate, (meth)acrylate-functional pentaerythritol derivatives (e.g. pentaerythritol tri(meth)acrylate, pentaerythritol tetra(meth)acrylate, dipentaerythritol hexa(meth)acrylate, dipentaerythritol penta(meth)acrylate, or dipentaerythritol tetra(meth)acrylate), ditrimethylolpropane tetra(meth)acrylate, ethoxylated bisphenol A di(meth)acrylate, propoxylated bisphenol A di(meth)acrylate, ethoxylated hydrogenated bisphenol A di(meth)acrylate, propoxylated -modified hydrogenated bisphenol A di(meth)acrylate, and ethoxylated bisphenol F di(meth)acrylate.

In one embodiment, the present compositions comprise one or more components having at least 3 (meth)acrylate groups, for instance 3-6 (meth)acrylate groups or 5-6 (meth)acrylate groups.

If present, the compositions may comprise, relative to the total weight of the composition, at least 3 wt% of one or more free radical polymerizable components, for instance at least 5 wt% or at least 9 wt%. Generally, the compositions comprise, relative to the total weight of the composition, less than 50 wt% of free radical polymerizable components, for instance less than 35 wt%, less than 25 wt%, less than 20 wt%, or less than 15 wt%.

### (C) Hydroxy-functional components

Preliminarily, hydroxy-functional components in this section (C) are understood to be absent curable groups (such as, *e*.*g*., acrylate-, epoxy-, or oxetane groups) and to be not selected from the group consisting of photoinitiators.

The present compositions may comprise one or more hydroxy-functional components. Hydroxy-functional components may be helpful in further tailoring mechanical properties of the present compositions upon cure. Hydroxy-functional components include monols (hydroxy-functional components comprising one hydroxy group) and polyols (hydroxy-functional components comprising more than one hydroxy group).

Representative examples of hydroxy-functional components include alkanols, monoalkyl ethers of polyoxyalkyleneglycols, monoalkyl ethers of alkyleneglycols, alkylene and arylalkylene glycols, such as 1,2,4-butanetriol, 1,2,6-hexanetriol, 1,2,3-heptanetriol, 2,6-dimethyl-1,2,6-hexanetriol, (2R,3R)-(-)-2-benzyloxy-1,3,4-butanetriol, 1,2,3-hexanetriol, 1,2,3-butanetriol, 3-methyl-1,3,5-pentanetriol, 1,2,3-cyclohexanetriol, 1,3,5-cyclohexanetriol, 3,7,11,15-tetramethyl-1,2,3-hexadecanetriol, 2-hydroxymethyltetrahydropyran-3,4,5-triol, 2,2,4,4-tetramethyl-1,3-cyclobutanediol, 1,3-cyclopentanediol, trans-1,2-cyclooctanediol, 1,16-hexadecanediol, 3,6-dithia-1,8-octanediol, 2-butyne-1,4-diol, 1,3-propanediol, 1,4-butanediol, 1,5-pentanediol, 1,6-hexanediol, 1,7-heptanediol, 1,8-octanediol, 1,9-nonanediol, 1-phenyl-1,2-ethanediol, 1,2-cyclohexanediol, 1,5-decalindiol, 2,5-dimethyl-3-hexyne-2,5-diol, 2,7-dimethyl-3,5-octadiyne-2-7-diol, 2,3-butanediol, 1,4-cyclohexanedimethanol, polyoxyethylene and polyoxypropylene glycols and triols of molecular weights from about 200 to about 10,000, polytetramethylene glycols of varying molecular weight, poly(oxyethylene-oxybutylene) random or block copolymers, copolymers containing pendant hydroxy groups formed by hydrolysis or partial hydrolysis of vinyl acetate copolymers, polyvinylacetal resins containing pendant hydroxyl groups; hydroxy-functional (e.g. hydroxy-terminated) polyesters and hydroxy-functional (e.g. hydroxy-terminated) polylactones, aliphatic polycarbonate polyols (e.g. an aliphatic polycarbonate diol), hydroxy-functional (e.g. hydroxy-terminated) polyethers (e.g. polytetrahydrofuran polyols having a number average molecular weight in the range of 150-4000 g/mol, 150-1500g/mol, or 150-750 g/mol), and combinations thereof.

In one embodiment, the compositions are absent substantial amounts of hydroxy-functional components. The absence of substantial amounts of hydroxy-functional components may decrease the hygroscopicity of the compositions and/or articles obtained therewith. For instance, the compositions may comprise, relative to the total weight of the composition, less than 15 wt%, less than 10 wt%, less than 6 wt%, less than 4 wt%, less than 2 wt%, or about 0 wt% of hydroxy-functional components.

### (D) Cationic photoinitiators

The present compositions preferably comprise one or more cationic photoinitiators, *i*.*e*. photoinitiators that, upon exposure to actinic radiation, form cations that can initiate the reactions of cationically polymerizable components, such as epoxies or oxetanes.

Examples of cationic photoinitiators include, for instance, onium salts with anions of weak nucleophilicity. Examples include halonium salts, iodosyl salts or sulfonium salts, such as are described in published European patent application EP 153904 and WO 98/28663, sulfoxonium salts, such as described, for example, in published European patent applications EP 35969, 44274, 54509, and 164314, or diazonium salts, such as described, for example, in U.S. Patents 3,708,296 and 5,002,856. All eight of these disclosures are hereby incorporated in their entirety by reference. Other examples of cationic photoinitiators include metallocene salts, such as described, for instance, in published European applications REP 94914 and 94915, which applications are both hereby incorporated in their entirety by reference.

In one embodiment, the present compositions comprise one or more photoinitiators represented by the following formula (7) or (8): 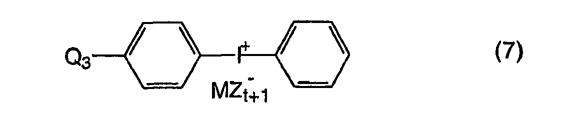 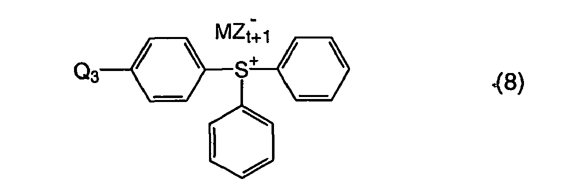 wherein
Q₃ represents a hydrogen atom, an alkyl group having 1 to 18 carbon atoms, or an alkoxyl group having 1 to 18 carbon atoms;
M represents a metal atom, *e*.*g*. antimony;
Z represents a halogen atom, *e*.*g*. fluorine; and
t is the valent number of the metal, *e*.*g*. 5 in the case of antimony.

In one embodiment, the present compositions comprise, relative to the total weight of the composition, 0.1-15 wt% of one or more cationic photoinitiators, for instance 1-10 wt%.

### (E) Free radical photoinitiators

The compositions may employ one or more free radical photoinitiators. Examples of free radical photoinitiators include benzophenones (*e*.*g*. benzophenone, alkyl-substituted benzophenone, or alkoxy-subsituted benzophenone); benzoins, *e*.*g*. benzoin, benzoin ethers, such as benzoin methyl ether, benzoin ethyl ether, and benzoin isopropyl ether, benzoin phenyl ether, and benzoin acetate; acetophenones, such as acetophenone, 2,2-dimethoxyacetophenone, 4-(phenylthio)acetophenone, and 1,1-dichloroacetophenone; benzil, benzil ketals, such as benzil dimethyl ketal, and benzil diethyl ketal; anthraquinones, such as 2-methylanthraquinone, 2-ethylanthraquinone, 2-tertbutylanthraquinone, 1-chloroanthraquinone, and 2-amylanthraquinone; triphenylphosphine; benzoylphosphine oxides, such as, for example, 2,4,6-trimethylbenzoyidiphenylphosphine oxide; thioxanthones and xanthones, acridine derivatives, phenazene derivatives, quinoxaline derivatives or I-phenyl-1,2-propanedione-2-0-benzoyloxime, I-aminophenyl ketones or I-hydroxyphenyl ketones, such as I-hydroxycyclohexyl phenyl ketone, phenyl (1-hydroxyisopropyl)ketone and 4-isopropylphenyl(1-hydroxyisopropyl)ketone, or triazine compounds, for example, 4"'-methyl thiophenyl-1-di(trichloromethyl)-3;5-S-triazine, S-triazine-2-(stilbene)-4,6-bistrichloromethyl, and paramethoxy styryl triazine.

Further suitable free radical photoinitiators include the ionic dye-counter ion compounds, which are capable of absorbing actinic rays and producing free radicals, which can initiate the polymerization of the acrylates. See, for example, published European Patent Application 223587, and U.S. Patents 4,751,102, 4,772,530 and 4,772,541, all four of which are hereby incorporated in their entirety by reference.

In one embodiment, the present compositions comprise, relative to the total weight of the composition, 0.1-15 wt% of one or more free radical photoinitiators, for instance 1-10 wt%.

### (F) Additives

Additives may also be present in the composition of the invention. Stabilizers are sometimes added to the compositions in order to prevent a viscosity build-up, for instance a viscosity build-up luring usage in a solid imaging process. Preferred stabilizers include those described in U.S. Patent 5,665,792, the entire disclosure of which is hereby incorporated by reference. Such stabilizers are usually hydrocarbon carboxylic acid salts of group IA and IIA metals. Most preferred examples of these salts are sodium bicarbonate, potassium bicarbonate, and rubidium carbonate. Alternative stabilizers are polyvinylpyrrolidones and polyacrylonitriles. Other possible additives are dyes, including dyes that change color upon cure. Examples of color-changing dyes include COPIKEM 20 (3,3-bis (1-butyl -2-methyl-H-indol-3-yl) - 1-(3H)-isobenzofuranone), COPIKEM 5 (2'-di (phenylmethy) amino-6'-(diethylamino)spiro(isobenzofuran-1(3H),9'-(9H)xanthen)-3-one), COPIKEM 14 ( a substituted phthalide), COPIKEM 7 (3-{(4-dimethylamino)-phenyl}-3-(1-butyl-2-methylindol-3-yl) -6-dimethyamino) -1(3H)-isobenzofuranone), and COPIKEM 37 (2-(2-octoxyphenyl)-4-(4-dimethylaminophenyl)-6-(phenyl)pyridine). If present, the amount of color-changing dyes in the compositions is, relative to the total weight of the composition, preferably at least 0.0001 wt%, for instance at least 0.0005 wt%. In one embodiment, the amount of dye is, relative to the total weight of the composition, less than 1 wt%, *e*.*g*. less than 0.1 wt%. Even further examples of additives include antioxidants, wetting agents, antifoaming agents, thickening agents, photosensitizers (*e*.*g*. n-ethyl carbazole, benzoperylene, 1,8-dipheny)-1,3,5,7-octatetraene, or 1,6-diphenyl-1,3,5-hexatriene), and metallic-, organic-, inorganic-, or organic-inorganic hybrid fillers (*e*.*g*. silica particles, glass beads, or talc). The size of the fillers may vary and can be, for instance, in the nanometer range or in the micrometer range. In one embodiment, the present compositions comprise, relative to the total weight of the composition, less than 20 wt% of fillers, *e*.*g*. less than 10 wt%, less than 5 wt%, or about 0 wt%. In another embodiment, the present compositions comprise, relative to the total weight of the composition, up to 90 wt% of filler, *e*.*g*. 20-90 wt%, 40-90 wt%, or 60-90 wt%.

### Physical parameters

The present compositions, after full cure, preferably have a heat deflection temperature ("HDT") under a pressure of 1.82 MPa (264 psi) of at least 105°C, for instance at least 110°C, at least 115°C, at least 120°C, or at least 125°C. The HDT (1.82 MPa) is generally below 300°C.

The present compositions, after full cure, preferably have an elongation at break of at least 1.5%, for instance at least 2.0%, at least 2.5%, at least 3%, or at least 3.5%. The elongation at break is generally below 50%.

The present compositions preferably have an E10 cure speed of less than 85 mJ/cm², for instance less than 80 mJ/cm², less than 70 mJ/cm², less than 60 mJ/cm², less than 55 mJ/cm², less than 50 mJ/cm², or less than 45 mJ/cm².

The physical condition of the present compositions may vary and can be, for instance, a liquid, a gel, a paste, or a solid. If the composition is a liquid, it preferably has a viscosity, at 30°C, of less than 1000 mPas, for instance less than 750 mPas, less than 650 mPas, less than 550 mPas, less than 450 mPas, or less than 350 mPas.

The present compositions, after full cure, preferably have a tensile strength of at least 35 MPa, for instance at least 40 MPa, at least 50 MPa, at least 60 MPa, or at least 70 MPa.

The present compositions, after full cure, preferably have a Young's modulus of at least 1500 MPa, for instance at least 2000 MPa, at least 2500 MPa, at least 2750 MPa, or at least 3000 MPa.

The present compositions, after full cure, preferably have a glass transition temperature (Tg) of at least 105°C, for instance at least 110°C, at least 120°C, at least 130°C, at least 140°C, or at least 150°C. The Tg is generally below 300°C.

### Applications

The present compositions may be used, for instance, as coating compositions or as compositions for preparing a three dimensional object by rapid prototyping. The compositions may be cured by heat or any suitable form of radiation, *e.g.* electron beam radiation or actinic radiation, or mixtures thereof. For instance, the composition may first be cured to a certain extent by radiation and subsequently be post-cured by heat.

Rapid prototyping, sometimes also referred to as "solid imaging" or "stereolithography", concerns the imagewise curing of successive thin layers of a curable composition to form a three-dimensional object. *See, e*.*g*., U.S. Patents 4,987,044; 5,014,207; 5,474,719; 5,476,748; and 5,707,780; which are all five hereby incorporated in their entirety by reference. A rapid prototyping process may for instance be described as:
(1) coating a layer of a composition onto a surface;
(2) exposing said layer imagewise to actinic radiation to form an imaged cross-section;
(3) coating a further layer of the composition onto said imaged cross-section;
(4) exposing said further layer imagewise to actinic radiation to form an additional imaged cross-section;
(5) repeating steps (3) and (4) a sufficient number of times in order to build up a three-dimensional article;
(6) optionally, post-curing the three-dimensional article.

The following examples are given as particular embodiments of the invention and to demonstrate the practice and advantages thereof. It is to be understood that the examples are given by way of illustration and are not intended to limit the specification or the claims that follow in any manner.

### EXAMPLES

**Table 1: Glossary**

| **Commercial Name (Supplier)** | **Description** |
|---|---|
| EPON 825 ( Resolution Performance products) | bisphenol A diglycidyl ether (aromatic epoxy) |
| EPICLON N-740 (Dainippon Ink & Chemical) | phenol epoxy novolac (aromatic epoxy) |
| HELOXY 64 (Resolution Performance Products) | nonylphenyl glycidyl ether (aromatic epoxy) |
| UVACURE 1500 (UCB Radcure) | 3,4-epoxy cyclohexyl methyl-3,4-epoxy cyclohexyl carboxylate (aliphatic epoxy) |
| UVR 6000 (Dow Chemical) | 3-ethyl-3-hydroxymethyl-oxetane (oxetane) |
| SR-399 (Sartomer) | monohydroxy dipentaerythritol pentaacrylate |
| IRGACURE 184 (Ciba Geigy) | 1-hydroxycyclohexyl phenyl ketone |
| DAROCURE 1173 (Ciba Geigy) | 2-hydroxy-2-methyl-1-phenyl-1-propanone |
| CPI-6976 (Aceto) | mixture of triarysulfonium hexafluoroantimonate salts |
| SILWET L-7600 (OSI Specialities) | surfactant |
| BYK-A-501 (BYK-Chemie) | defoamer |
| PVP (Aldrich) | stabilizer (polyvinylpyrolidone, Mwca. 10,000) |

Compositions were prepared by mixing the components listed in Table 2 (Examples 1-8) and Table 3 (Comparative Examples A-B), with amounts of the components being listed in parts by weight. The thus prepare compositions were subsequently analyzed in accordance with the Test Methods described below. The test results are also listed in Tables 2 and 3.

**Table 2: Examples 1-8**

| **Ingredients** | **Ex.1** | **Ex. 2** | **Ex. 3** | **Ex. 4** | **Ex. 5** | **Ex. 6** | **Ex. 7** | **Ex. 8** |
|---|---|---|---|---|---|---|---|---|
| EPON 825 | 42 | 39 | 50 | 42.1 | 40.5 | 34.0 | 42.4 | 38.4 |
| EPICLON N-740 | 8 | 16 | | 13 | 12.5 | 13.4 | 12.3 | 17.5 |
| HELOXY 64 | | | | | 3.8 | | | |
| UVACURE 1500 | 12.5 | 12.5 | 12.5 | 12.5 | 12.0 | 20.2 | 12.5 | 13 |
| UVR 6000 | 20 | 15 | 20 | 15.5 | 15.5 | 15.5 | 16 | 16.6 |
| SR399 | 12 | 12 | 12 | 11 | 10.6 | 11.0 | 11 | 9.2 |
| CPI 6976 | 4 | 4 | 4 | 2.8 | 2.7 | 4 | 4 | 4 |
| IRGACURE 184 | 1.5 | 1.5 | 1.5 | 2.8 | 2.7 | 1.6 | | 1.6 |
| DAROCURE 1173 | | | | | | | 1.6 | |
| SILWET L-7600 | 0.2 | 0.2 | 0.2 | 0.2 | 0.2 | 0.2 | 0.2 | 0.2 |
| BYK A501 | 0.02 | 0.02 | 0.02 | 0.02 | 0.02 | 0.02 | 0.02 | 0.02 |
| PVP | 0.005 | 0.005 | 0.005 | 0.005 | 0.005 | | 0.005 | 0.005 |

| **Test results** | | | | | | | | |
|---|---|---|---|---|---|---|---|---|
| E_{c} [mJ/cm²] | 10.3 | 8.4 | 6.8 | 8.7 | 9.9 | 5.2 | 9.6 | 7.8 |
| Dp [µm] | 130 | 117 | 137 | 140 | 152 | 112 | 130 | 122 |
| E10 [mJ/cm²] | 73.4 | 73.6 | 44.3 | 53.5 | 51.8 | 49.9 | 68.9 | 61.8 |
| T_{g} [°C] | 129.8 | 151 | 118 | 132 | 127 | 135 | 131 | 127 |
| HDT (1.82 MPa) [°C] | 110.7 | 1.29.3 | 109 | 125.5 | 119.6 | | | |
| Young's modulus [MPa] | 3013 | 3131 | 3000 | 2951 | 3048 | 3083 | 3138 | 3000 |
| Elongation at break [%] | 3.7 | 2.6 | 3.5 | 3.3 | 3.7 | 2.3 | 2.0 | 1.7 |
| Tensile Strength [MPa] | 71.4 | 60.8 | 71.4 | 68.7 | 75.2 | 55.7 | 49.7 | 46.0 |
| Viscosity, 30°C [mPas] | 334 | 675 | 275 | 575 | 520 | 420 | 490 | |

**Table 3: Comparative Examples A and B**

| **Ingredients** | **Comp. Ex. A** | **Comp. Ex. B** |
|---|---|---|
| EPON 825 | 49.6 | 52.8 |
| EPICLON N-740 | 16 | 16 |
| UVR 6000 | 16 | 16.6 |
| SR399 | 12 | 10.5 |
| CPI 6976 | 3.6 | 4 |
| IRGACURE 184 | 2.6 | 1.8 |
| DAROCURE 1173 | 0.2 | 0.2 |
| SILWET L-7600 | 0.02 | 0.02 |
| BYK A501 | 0.005 | 0.005 |

| **Test results** | | |
|---|---|---|
| Ec [mJ/cm²] | 14.4 | 20.8 |
| Dp [µm] | 140 | 140 |
| E10 [mJ/cm²] | 88.2 | 126.9 |
| T_{g} [°C] | 123 | 91 |
| Young's modulus [MPa] | 2979 | 3028 |
| Elongation at break [%] | 2.5 | 3.5 |
| Tensile Strength after [MPa] | 59.6 | 71.6 |
| Viscosity, 30°C [mPas] | 850 | |

### TEST METHODS

### (a) Tensile Strength, Young's modulus, and Elongation at Break

Tensile data was obtained by testing tensile bars ("dogbones") made by first consecutively imaging 150µm thick layers of the composition to be tested in a rapid prototyping machine. Each cross-sectional layer of the tensile bar was given exposure sufficient to polymerize the composition at a 250 µm depth, providing approximately 100 µm of overcure or engagement cure to assure adhesion to the previously coated and exposed layer. The layers were exposed with a laser emitting in the ultraviolet (UV) region at 354.7 nm. The resulting tensile bars/dogbones were approximately 150 mm long and had a cross-section in the narrowed portion of approximately 1 cm x 1cm. After preparation of the tensile bar in the rapid prototyping machine, the tensile bar was removed from the machine, washed with tri(propyleneglycol) methyl ether ("TPM") and isopropanol, and placed in a post-curing apparatus ("PCA" sold by 3-D Systems, 10 bulb unit using Phillips TLK/05 40W bulbs). In the PCA, the tensile bar was post-cured first by subjecting it to 60 minutes of UV radiation at room temperature. After these 60 minutes, the UV radiation was stopped and the tensile bar was subjected to 160°C for two hours. The procedure of rapid prototyping a composition and post-curing a composition in the manner just described is understood herein to result in fully cured samples. The tensile tests to determine tensile strength, Young's modulus, and elongation at break were run one day after preparation of the tensile bar and in accordance with ASTM D638, which is hereby incorporated in its entirety by reference, except that no provision was made for controlling the room temperature and humidity and the bars were not equilbrated for 2 days. The reported data is the average of three measurements.

### (b) Viscosity

The composition was added to a 250-mL screw cap bottle and heated to 30°C by placing it in a 30°C bath for at least one hour. The viscosity of the composition was then determined with a Brookfield DV-II+ Viscometer employing a #3 spindle.

### (c) Glass Transition Temperature (T_{g})

A fully cured specimen was prepared in the same manner as described above for the preparation of a tensile bar. Part of the specimen was places in a TA Instruments TMA 2940 at room temperature. The specimen was then heated with a ramp of 3°C/min from room temperature to 250°C under a nitrogen purge of 60 mL/min. A graph of dimension change over temperature was generated and analyzed by using TA Instrument Universal Analysis V2.6D software, which calculated the glass transition temperature from a sudden change in the slope of the thermal expansion curve.

### (d) Heat Deflection Temperature (HDT)

Fully cured specimens for determining the HDT were prepared in the same manner as the above tensile bars, except that the dimensions of the specimens for the HDT measurements were 5 inch (12.7 cm) in length and 0.5x0.5 inch (12.7mm x 12.7mm) in cross-section. The HDT (under a pressure of 1.82 MPa) of the specimens was then determined according to ASTM D648-00a Method B, which is hereby incorporated in its entirety by reference, employing an ATLAS HDV2 Automated instrument.

### (e) E10, Dₚ, and E_{c}

The photoproperties E_{c} (mJ/cm²), Dp (µm), and E10 (mJ/cm²) represent the photoresponse (in this case thickness of layer formed) of a particular formulation to exposure by a single wavelength or range of wavelengths. In the instant Examples and Comparative Examples, at least 20 grams of composition was poured into a 100 mm diameter petri-dish and allowed to equilibrate to approximately 30°C and 30% RH. The samples were then scanned in a line-by-line fashion using a focused laser beam of approximately 100-140 mW. The laser, a frequency tripled YAG laser, had an output wavelength of 354.7 nm and was pulsed at 80 KHz. The exposures were made in a square pattern approximately 20 mm by 20 mm. Six individual exposures were made at near constant laser power but at various scan speeds. The parallel scan lines making up each exposure were drawn approximately 50 µm apart. Based upon knowledge of the diameter of the focused beam at the liquid surface, the scan speed, the laser power, and the scan spacing, the summation of exposure mJ/cm² was calculated. Each square was allowed to float on the surface of the petri-dish for approximately 15 minutes. Then the squares were blotted and a thickness measurement was taken using Mitutoyo NTO25-8°C spring loaded Absolute Digimatic calipers. When the natural log of the exposures is plotted against the measured thickness a least squares fit line can be drawn. The Dₚ (µm) is the slope of the least squares fit line. The E_{c} (mJ/cm²) is the X-axis crossing point (Y=0) of the line. And the E10 is the energy necessary to produce a layer approximately 10 mils (254 µm) thick. In general, the lower the E10 number, the faster the photospeed of the composition.

## Claims

1. A curable rapid prototyping composition comprising:
(i) at least 50 wt%, relative to the total weight of the composition, of one or more aromatic epoxies;
(ii) one or more aliphatic epoxies; and
(iii) one or more oxetanes
wherein said composition, after full cure, has a heat deflection temperature (1.82 MPa) of at least 105°C and an elongation at break of at least 1.5%.

2. The composition of claim 1, wherein said composition comprises two or more aromatic epoxies.

3. The composition according to claims 1 or 2, wherein said composition comprises 5-40 wt%, relative to the total weight of the composition, of said one or more oxetanes.

4. The composition according to any one of claims 1-3, wherein said one or more aliphatic epoxies consist essentially of epoxies comprising a cycloaliphatic ring structure.

5. The composition according to any one of claims 1-4, wherein said one or more aliphatic epoxies include an epoxy comprising two cyclohexene oxide structures.

6. The composition according to any one of claims 1-5, wherein said composition comprises 5-30 wt% of said one or more aliphatic epoxies.

7. The composition according to any one of claims 1-6, wherein said composition comprises an epoxy having no more than one epoxy group.

8. The composition according to any one of claims 1-7, wherein said composition further comprises one or more free radical polymerizable components.

9. The composition of claim 8, wherein said one or more free radical polymerizable components include a component having 5 or 6 (meth)acrylate groups.

10. The composition according to any one of claims 8-9, wherein said composition comprises 5-25 wt%, relative to the total weight of the composition, of said one or more free radical polymerizable component.

11. The composition according to any one of claims 1-10, wherein said one or more aromatic epoxies include a phenol epoxy novolac and/or a cresol epoxy novolac.

12. The composition according to any one of claims 1-11, wherein said one or more aromatic epoxies includes a bisphenol diglycidyl ether.

13. The composition according to any one of claims 1-12, wherein said composition comprises a (meth)acrylate functional pentaerythritol derivative.

14. The composition according to any one of claims 1-13, wherein said composition further comprises a cationic photoinitiator and a free radical photoinitiator.

15. The composition according to any one of claims 1-14, wherein said composition comprises about 0-4 wt% of hydroxy-functional components that are absent a curable group and are not selected from the group consisting of photoinitiators.

16. The composition according to any one of claims 1-15, wherein said heat deflection temperature is at least 115°C.

17. The composition according to any one of claims 1-15, wherein said heat deflection temperature is at least 125°C.

18. The composition according to any one of claims 1-17, wherein said elongation to break is at least 2%.

19. The composition according to any one of claims 1-17, wherein said elongation to break is at least 3%.

20. The composition according to any one of claims 1-19, wherein said composition has an E10 cure speed of less than 80 mJ/cm².

21. The composition according to any one of claims 1-20, wherein said composition has a viscosity of less than 750 mPas at 30°C.

22. The composition according to any one of claims 1-21, wherein said composition, after full cure, has a tensile strength of at least 35 MPa.

23. The composition according to any one of claims 1-22, wherein said composition, after full cure, has a modulus of at least 2000 MPa.

24. The composition according to any one of claims 1-23, wherein said composition comprises a color-changing dye.

25. A curable composition according to anyone of claims 1-24 having an E10 cure speed of less than 80 mJ/cm2 and, after cure by radiation and heat, a heat deflection temperature (1.82 MPa) of at least 125°C and an elongation at break of at least 2.5%.

26. The composition according to any one of claims 1-25, wherein said composition comprises, relative to the total weight of the composition, 0 wt% filler.

27. A rapid prototyping process comprising:
(1) coating a layer of a composition according to any one of claims 1-26 onto a surface;
(2) exposing said layer imagewise to actinic radiation to form an imaged cross-section;
(3) coating a layer of said composition according to any one of claims 1-26 onto the previously exposed imaged cross-section;
(4) exposing said layer from step (3) imagewise to actinic radiation to form an additional imaged cross-section;
(5) repeating steps (3) and (4) a sufficient number of times to form a three-dimensional article.

28. An article obtainable by the process of claim 27.

29. Use of a curable rapid prototyping composition according to anyone of claims 1-28 for making a three dimensional article, whereby the article has a heat deflection temperature (at 1.82 MPa) of at least 105°C and an elongation at break of at least 1.5%.

30. Use according to claim 29, whereby has a heat deflection temperature (1.82 MPa) of at least 125 °C.

31. Use according to claims 29 or 30, wherein the article has an elongation at break of at least 2.5%.

## Patentansprüche

1. Härtbare, schnelle Prototypzusammensetzung, umfassend:
(i) zumindest 50 Gew.-%, bezogen auf das Gesamtgewicht der Zusammensetzung, von einer oder mehreren aromatischen Epoxyverbindungen;
(ii) eine oder mehrere aliphatische Epoxyverbindungen; und
(iii) ein oder mehrere Oxetane,
worin die Zusammensetzung nach vollständiger Härtung eine Formbeständigkeitstemperatur (1,82 MPa) von wenigstens 105°C und eine Dehnung beim Bruch von mindestens 1,5% hat.

2. Zusammensetzung nach Anspruch 1, worin die Zusammensetzung zwei oder mehrere aromatische Epoxyverbindungen umfasst.

3. Zusammensetzung nach Anspruch 1 oder 2, worin die Zusammensetzung 5 bis 40 Gew.-%, bezogen auf das Gesamtgewicht der Zusammensetzung, des einen oder dermehreren Oxetane umfasst.

4. Zusammensetzung nach einem der Ansprüche 1 bis 3, worin die eine oder die mehreren aliphatischen Epoxyverbindungen im Wesentlichen aus Epoxyverbindungen bestehen, umfassend eine cycloaliphatische Ringstruktur.

5. Zusammensetzung nach einem der Ansprüche 1 bis 4, worin die eine oder die mehreren aliphatischen Epoxyverbindungen eine Epoxyverbindung umfassen, umfassend zwei Cyclohexenoxidstrukturen.

6. Zusammensetzung nach einem der Ansprüche 1 bis 5, worin die Zusammensetzung 5 bis 30 Gew.-% der einen oder der mehreren aliphatischen Epoxyverbindungen umfasst.

7. Zusammensetzung nach einem der Ansprüche 1 bis 6, worin die Zusammensetzung ein Epoxy mit nicht mehr als einer Epoxygruppe umfasst.

8. Zusammensetzung nach einem der Ansprüche 1 bis 7, worin die Zusammensetzung weiterhin eine oder mehrere frei radikalisch polymerisierbare Komponenten umfasst.

9. Zusammensetzung nach Anspruch 8, worin die eine oder die mehreren frei radikalisch polymerisierbaren Komponenten eine Komponente mit 5 oder 6 (Meth)acrylatgruppen umfasst.

10. Zusammensetzung nach einem der Ansprüche 8 bis 9, worin die Zusammensetzung 5 bis 25 Gew.-%, bezogen auf das Gesamtgewicht der Zusammensetzung, der einen oder der mehreren frei radikalisch polymerisierbaren Komponenten umfasst.

11. Zusammensetzung nach einem der Ansprüche 1 bis 10, worin die eine oder die mehreren aromatischen Epoxyverbindungen ein Phenolepoxynovolak und/oder ein Cresolepoxynovolak umfassen.

12. Zusammensetzung nach einem der Ansprüche 1 bis 11, worin die eine oder die mehreren aromatischen Epoxyverbindungen einen Bisphenoldiglycidylether umfassen.

13. Zusammensetzung nach einem der Ansprüche 1 bis 12, worin die Zusammensetzung ein (Meth)acrylat-funktionelles Pentaerythritderivat umfasst.

14. Zusammensetzung nach einem der Ansprüche 1 bis 13, worin die Zusammensetzung weiterhin einen kationischen Photoinitiator und einen freien radikalischen Photoinitiator umfasst.

15. Zusammensetzung nach einem der Ansprüche 1 bis 14, worin die Zusammensetzung etwa 0 bis 4 Gew.-% von hydroxyfunktionellen Komponenten umfasst, die keine härtbare Gruppe enthalten und nicht ausgewählt sind aus der Gruppe bestehend aus Photoinitiatoren.

16. Zusammensetzung nach einem der Ansprüche 1 bis 15, worin die Formbeständigkeitstemperatur zumindest 115°C ist.

17. Zusammensetzung nach einem der Ansprüche 1 bis 15, worin die Formbeständigkeitstemperatur zumindest 125°C ist.

18. Zusammensetzung nach einem der Ansprüche 1 bis 17, worin die Dehnung beim Bruch zumindest 2% ist.

19. Zusammensetzung nach einem der Ansprüche 1 bis 17, worin die Dehnung beim Bruch zumindest 3% ist.

20. Zusammensetzung nach einem der Ansprüche 1 bis 19, worin die Zusammensetzung eine E10-Härtungsgeschwindigkeit von weniger als 80 mJ/cm² hat.

21. Zusammensetzung nach einem der Ansprüche 1 bis 20, worin die Zusammensetzung eine Viskosität von weniger als 750 mPas bei 30°C hat.

22. Zusammensetzung nach einem der Ansprüche 1 bis 21, worin die Zusammensetzung nach vollständiger Härtung eine Zugfestigkeit von wenigstens 35 MPa hat.

23. Zusammensetzung nach einem der Ansprüche 1 bis 22, worin die Zusammensetzung nach vollständiger Härte einen Modul von wenigstens 2000 MPa hat.

24. Zusammensetzung nach einem der Ansprüche 1 bis 23, worin die Zusammensetzung einen Farbstoff umfasst, der die Farbe ändert.

25. Härtbare Zusammensetzung nach einem der Ansprüche 1 bis 24, mit einer E10-Härtungsgeschwindigkeit von weniger als 80 mJ/cm² und nach Härtung durch Strahlung und Wärme eine Formbeständigkeitstemperatur (1,82 MPa) von wenigstens 125°C und eine Dehnung beim Bruch von wenigstens 2,5% hat.

26. Zusammensetzung nach einem der Ansprüche 1 bis 25, worin die Zusammensetzung, bezogen auf das Gesamtgewicht der Zusammensetzung, 0 Ges.-% Füllstoff umfasst.

27. Schnelles Prototypverfahren, umfassend:
(1) Schichten einer Schicht aus einer Zusammensetzung nach einem der Ansprüche 1 bis 26 auf eine Oberfläche;
(2) bildweises Belichten der Schicht mit aktinischer Strahlung, unter Bildung eines abgebildeten Querschnittes;
(3) Schichten einer Schicht aus der Zusammensetzung gemäß einem der Ansprüche 1 bis 26 auf den zuvor belichteten, abgebildeten Querschnitt;
(4) bildweises Belichten der Schicht von Schritt (3) mit aktinischer Strahlung, zur Bildung eines zusätzlichen abgebildeten Querschnittes;
(5) Wiederholen der Schritte (3) und (4) in ausreichender Menge, zur Bildung eines dreidimensionalen Gegenstandes.

28. Gegenstand, erhältlich durch das Verfahren von Anspruch 27.

29. Verwendung einer härtbaren schnellen Prototypzusammensetzung gemäß einem der Ansprüche 1 bis 28, zur Erzeugung eines dreidimensionalen Gegenstandes, wobei der Gegenstand eine Formbeständigkeitstemperatur (bei 1,82 MPa) von mindestens 105°C und eine Dehnung beim Bruch von mindestens 1,5% hat.

30. Verwendung nach Anspruch 29, wobei die Formbeständigkeitstemperatur (1,82 MPa) wenigstens 125°C ist.

31. Verwendung nach Anspruch 29 oder 30, worin der Gegenstand eine Dehnung beim Bruch von wenigstens 2,5% hat.

## Revendications

1. Composition de prototypage rapide durcissable comprenant :
(i) au moins 50 % en poids, par rapport au poids total de la composition, d'un ou plusieurs époxy aromatiques ;
(ii) un ou plusieurs époxy aliphatiques ; et
(iii) un ou plusieurs oxétanes
dans laquelle ladite composition, après durcissement complet, présente une température de déviation thermique (1,82 MPa) d'au moins 105°C et un allongement à la rupture d'au moins 1,5 %.

2. Composition selon la revendication 1, dans laquelle ladite composition comprend deux ou plusieurs époxy aromatiques.

3. Composition selon la revendication 1 ou 2, dans laquelle ladite composition comprend 5-40 % en poids, par rapport au poids total de la composition, desdits un ou plusieurs oxétanes.

4. Composition selon l'une quelconque des revendications 1-3, dans laquelle lesdits un ou plusieurs époxy aliphatiques sont essentiellement constitués d'époxy comprenant une structure de noyau cycloaliphatique.

5. Composition selon l'une quelconque des revendications 1-4, dans laquelle lesdits un ou plusieurs époxy aliphatiques comprennent un époxy comprenant deux structures d'oxyde de cyclohexène.

6. Composition selon l'une quelconque des revendications 1-5, dans laquelle ladite composition comprend 5-30 % en poids desdits un ou plusieurs époxy aliphatiques.

7. Composition selon l'une quelconque des revendications 1-6, dans laquelle ladite composition comprend un époxy ne présentant pas plus d'un groupe époxy.

8. Composition selon l'une quelconque des revendications 1-7, dans laquelle ladite composition comprend de plus un ou plusieurs constituants polymérisables radicalairement.

9. Composition selon la revendication 8, dans laquelle lesdits un ou plusieurs constituants polymérisables radicalairement comprennent un constituant présentant 5 ou 6 groupes (méth)acrylates.

10. Composition selon l'une quelconque des revendications 8-9, dans laquelle ladite composition comprend 5-25 % en poids, rapporté au poids total de la composition, desdits un ou plusieurs constituants polymérisables radicalairement.

11. Composition selon l'une quelconque des revendications 1-10, dans laquelle lesdits un ou plusieurs époxy aromatiques comprennent un phénol époxy novolac et/ou un crésol époxy novolac.

12. Composition selon l'une quelconque des revendications 1-11, dans laquelle lesdits un ou plusieurs époxy aromatiques comprennent un bisphénol diglycydyléther,

13. Composition selon l'une quelconque des revendications 1-12, dans laquelle ladite composition comprend un dérivé de pentaérythritol (méth)acrylate-fonctionnel,

14. Composition selon l'une quelconque des revendications 1-13, dans laquelle ladite composition comprend de plus un photoinitiateur cationique et un photoinitiateur de radical libre.

15. Composition selon l'une quelconque des revendications 1-14, dans laquelle ladite composition comprend environ 0-4 % en poids de constituants hydroxy-fonctionnels qui sont des groupes durcissables manquants et qui ne sont pas choisis dans le groupe constitué de photoinitiateurs.

16. Composition selon l'une quelconque des revendications 1-15, dans laquelle ladite température de déviation thermique est d'au moins 115°C.

17. Composition selon l'une quelconque des revendications 1-15, dans laquelle ladite température de déviation thermique est d'au moins 125°C.

18. Composition selon l'une quelconque des revendications 1-17, dans laquelle ledit allongement à la rupture est d'au moins 2%.

19. Composition selon l'une quelconque des revendications 1-17, dans laquelle ledit allongement à la rupture est d'au moins 3 %.

20. Composition selon l'une quelconque des revendications 1-19, dans laquelle ladite composition présente une vitesse de durcissement E10 inférieure à 80 mJ/cm².

21. Composition selon l'une quelconque des revendications 1-20, dans laquelle ladite composition présente une viscosité inférieure à 750 MPa à 30°C.

22. Composition selon l'une quelconque des revendications 1-21, dans laquelle ladite composition, après durcissement complet, présente une résistance à la traction d'au moins 35 MPa.

23. Composition selon l'une quelconque des revendications 1-2, dans laquelle ladite composition, après durcissement complet, présente un module d'au moins 2 000 MPa.

24. Composition selon l'une quelconque des revendications 1-23, dans laquelle ladite composition comprend un colorant modifiant la couleur.

25. Composition durcissable selon l'une quelconque des revendications 1-24 présentant une vitesse de durcissement E10 inférieure à 80 ml/cm² et, après durcissement par rayonnement et chaleur, une température de déviation thermique (1,82 MPa) d'au moins 125°C et un allongement à la rupture d'au moins 2,5 %.

26. Composition selon l'une quelconque des revendications 1-25, dans laquelle ladite composition comprend, par rapport au poids total de la composition, 0 % en poids de charge.

27. Procédé de prototypage rapide comprenant :
(1) le revêtement d'une couche d'une composition selon l'une quelconque des revendications 1-26 sur une surface ;
(2) l'exposition de ladite couche à la manière d'une image à un rayonnement actinique pour former une section transversale imagée ;
(3) le revêtement d'une couche de ladite composition selon l'une quelconque des revendications 1-26 sur la section transversale imagée préalablement exposée;
(4) l'exposition de ladite couche de l'étape (3) à la manière d'une image à un rayonnement actinique pour former une section transversale imagée supplémentaire ;
(5) la répétition des étapes (3) et (4) un nombre suffisant de fois pour former un article tridimensionnel.

28. Article pouvant être obtenu par le procédé selon la revendication 27..

29. Utilisation d'une composition de prototypage rapide durcissable selon l'une quelconque des revendications 1-28 pour la fabrication d'un article tridimensionnel, l'article présente par là une température de déviation thermique (à 1,82 MPa) d'au moins 105°C et un allongement à la rupture d'au moins 1,5 %.

30. Utilisation selon la revendication 29, qui présente par là une température de déviation thermique (1,82 MPa) d'au moins 125°C.

31. Utilisation selon la revendication 29 ou 30, dans laquelle l'article présente un allongement à la rupture d'au moins 2,5 %.
